**Europäisches Patentamt**

**European Patent Office**

**Office européen des brevets**

(19)

(11) Veröffentlichungsnummer : **0 330 911 B1**

## EUROPÄISCHE PATENTSCHRIFT

(12)

(45) Veröffentlichungstag der Patentschrift :
03.06.92 Patentblatt 92/23

(51) Int. Cl.$^5$ : **A47J 31/54**

(21) Anmeldenummer : **89102590.0**

(22) Anmeldetag : **15.02.89**

(54) **Elektrischer Durchlauferhitzer für Getränkebereiter.**

(30) Priorität : **29.02.88 DE 8802663 U**

(43) Veröffentlichungstag der Anmeldung :
**06.09.89 Patentblatt 89/36**

(45) Bekanntmachung des Hinweises auf die
Patenterteilung :
**03.06.92 Patentblatt 92/23**

(84) Benannte Vertragsstaaten :
**AT DE FR**

(56) Entgegenhaltungen :
**EP-A- 0 049 820**
**DE-A- 2 530 968**
**DE-A- 3 424 469**
**DE-U- 8 336 499**

(73) Patentinhaber : **Conti Elektra Heizelemente GmbH**
**Romsthaler Strasse 4**
**W-6483 Bad Soden-Salmünster (DE)**

(72) Erfinder : **Neimanns, Nikolaus, Dipl.-Phys.**
**Giessenerstrasse 12**
**W-6483 Salmünster (DE)**

EP 0 330 911 B1

## Beschreibung

Die Erfindung bezieht sich auf einen elektrischen Durchlauferhitzer für Getränkebereiter nach dem Oberbegriff des Anspruches 1.

Elektrische Getränkebereiter der im Oberbegriff des Anspruches 1 angegebenen Gattung sind beispielsweise bereits aus der DE-U-83 36 499 bekannt. Hierbei ist der Rohrheizkörper mit dem Wasserführungsrohr längs einer Fußlinie verschweißt oder verlötet. Die dem Wasserführungsrohr zugewandte Seitenfläche des Rohrheizkörpers verläuft bei dem bekannten Durchlauferhitzer derart schräg, daß zwischen dem Wasserführungsrohr und dem Rohrheizkörper ein Spalt gebildet ist, der sich von der Fußlinie aus keilförmig erweitert. Mit der genannten Ausbildung wird eine Wärmeeinspeisung in das Wasserführungsrohr von unten her er strebt. Der Wärmeübergang vom Rohrheizkörper auf das Wasserführungsrohr wird wesentlich durch die Wärmeübergangsfläche zwischen den beiden Rohren bestimmt. Je nach Größe der Wärmeübergangsfläche ergibt sich ein unterschiedliches Kochverhalten des Durchlauferhitzers. Bei dem bekannten Durchlauferhitzer ist die Größe der Wärmeübergangsfläche von der verwendeten Lotmenge abhängig. Eine Untermenge Lot ergibt eine zu kleine Wärmeübergangsfläche. Eine übermenge Lot hat eine zu große Wärmeübergangsfläche zur Folge. Letztere entsteht dadurch, daß überschüssiges Lot den keilförmigen Spalt zwischen dem Rohrheizkörper und dem Wasserführungsrohr mehr oder minder ausfüllt. Um ein konstantes Kochverhalten zu erreichen, ist bei dem bekannten Durchlauferhitzer daher eine toleranzfreie Lotmenge erforderlich. Die genaue Dosierung der Lotmenge ist jedoch nur durch einen hohen Fertigungsaufwand zu erreichen.

Der Erfindung liegt die Aufgabe zu Grunde, den Durchlauferhitzer der im Oberbegriff des Anspruches 1 genannten Art so auszubilden, daß sein Kochverhalten auch bei einer Überschußmenge an Lot konstant bleibt.

Die gestellte Aufgabe wird erfindungsgemäß durch die im kennzeichnenden Teil des Anspruches 1 angegebene Ausbildung gelöst.

Zweckmäßige Aus-und Weiterbildungen des Erfindungsgegenstandes sind in den Ansprüchen 2 und 3 angegeben.

Zwei Ausführungsbeispiele der Erfindung sind in der Zeichnung schematisch dargestellt. Es zeigen:

Figur 1 eine Draufsicht auf einen Durchlauferhitzer für Getränkebereiter,

Figur 2 einen Schnitt nach Linie II-II in Figur 1,

Figur 3 einen Schnitt wie in Figur 2, wobei jedoch die geschnittenen Rohre einen anderen Querschnitt als die Rohre in Figur 2 aufweisen.

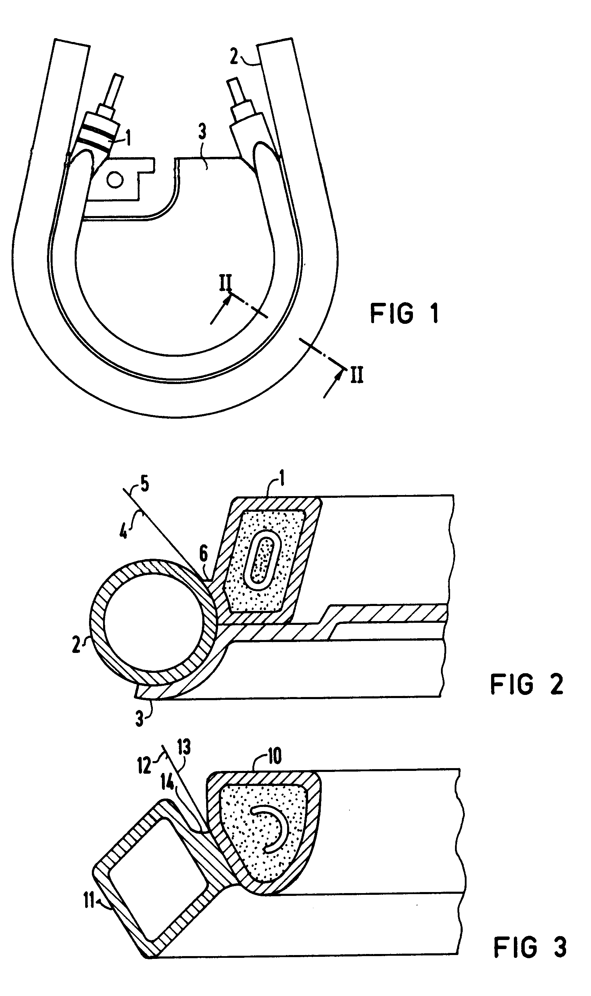

In den Figuren 1 und 2 ist ein elektrischer Durchlauferhitzer mit 1 bezeichnet. Das Bezugzeichen 2 gilt für ein Wasserführungsrohr. Der Rohrheizkörper 1 und das Wasserführungsrohr 2 sind nebeneinander angeordnet und durch Löten wärmeleitend miteinander verbunden. Die Rohre 1, 2 sind etwa hufeisenförmig gebogen (Figur 1), damit ihre Enden in die gleiche Richtung weisen. Ferner liegen die Rohre 1, 2 auf einer Tragplatte 3 auf und sind mit der Tragplatte 3 auf nicht gezeigte Weise verbunden. In der dargestellten Gebrauchslage beider Rohre 1, 2 überragt der Scheitel des Rohrheizkörpers 1 den Scheitel des Wasserführungsrohres 2. Der Rohrheizkörper 1 ist oben abgeflacht. Die Abflachung dient als Auflagefläche für eine nicht dargestellte Warmhalteplatte, auf der eine ebenfalls nicht dargestellte Getränkekanne abstellbar ist.

Im Betrieb wird die vom Rohrheizkörper 1 ausgehende Wärme einerseits auf die Warmhalteplatte übertragen und andererseits auf das Wasserführungsrohr 2, das die aufgenommene Wärme an das in ihm befindliche Wasser abgibt. Für den Wärmeübergang vom Rohrheizkörper 1 auf das Wasserführungsrohr 2 ist vornehmlich die Größe der Berührungsfläche zwischen den beiden Rohren 1, 2 maßgebend. Um eine eindeutig bestimmte, gleichbleibende Berührungsfläche zu erhalten, ist mindestens an einem der beiden Rohre 1, 2 eine Grenzfläche vorgesehen. Im Beispiel nach Figur 1 und 2 ist die Grenzfläche mit 4 bezeichnet und am Rohrheizkörper 1 angeformt. Die Grenzfläche bildet mit einer von ihr bedeckten, gleich großen Gegenfläche am Wasserführungsrohr 2 einen Kapillarspalt 5 für nicht bezeichnetes Lot, das beide Rohre 1, 2 verbundet. Wie ersichtlich, verläuft der Kapillarspalt 5 in der Gebrauchslage der Rohre 1, 2 aufsteigend.

Die Kontur der Grenzfläche 4 folgt in dem Beispiel nach Figur 1 und 2 der Kontur des hier im Querschnitt runden Wasserführungsrohres 2.

Das obere Ende der Grenzfläche 4 geht in einen abgewinkelten Schenkel 6 über. Dieser Schenkel 6 verläuft im gezeigten Beispiel etwa waagrecht. An seinem freien Ende schließt sich ein schräg vom Wasserführungsrohr 2 weggeneigter, aufsteigend verlaufender Rohrheizkörperabschnitt an. Der Schenkel 6 bildet eine Schwemmfläche für überschüssiges Lot, das aus dem Kapillarspalt 5 austritt. Der als Schwemmfläche dienende Schenkel 6 ist so angeordnet, daß auf ihn geschwemmtes Lot die entlang der Grenzfläche 4 verlaufende wirksame Wärmeübergangsfläche nicht oder nur unwesentlich vergrößert.

Es wurde festgestellt, daß sich ein besonders gutes Kochverhalten ergibt, wenn der Schenkel 6 unter dem Scheitel des lichten Durchganges des Wasserführungsrohres 2 liegt.

Im Beispiel nach der Figur 3 ist ein Rohrheizkörper mit 10 bezeichnet. Wie im Beispiel nach den Figuren

2

EP 0 330 911 B1

1 und 2 ist der Rohrheizkörper 10 an einem Wasserführungsrohr wärmeleitend entlanggeführt und angelötet. Das Wasserführungsrohr ist in dem Beispiel nach Figur 3 mit 11 bezeichnet. Sein Querschnitt hat die Form einer Raute, deren Spitzen in der Gebrauchslage beider Rohre 10, 11 übereinanderstehen. Im Gegensatz zu dem Beispiel nach Figur 1 und 2 ist in Figur 3 eine Grenzfläche 12 am Wasserführungsrohr 11 angeformt, und zwar an die dem Rohrheizkörper 10 zugewandte obere Rautenfläche. Die Grenzfläche 12 folgt hier der Kontur des Rohrheizkörpers 10 und verläuft, wie in den Beispielen nach den Figuren 1 und 2, ebenfalls aufsteigend. Die Grenzfläche 12 bildet mit der von ihr bedeckten Gegenfläche am Rohrheizkörper 10 einen Kapillarspalt 13 für nicht bezeichnetes Lot der Lötverbindung.

Das obere Ende der Grenzfläche 12 geht in einen abgewinkelten Schenkel 14 über, der eine Schwemmfläche für überschüssiges Lot bildet, das aus dem Kapillarspalt 13 austritt. Wie im Falle nach den Figuren 1 und 2 verläuft der Schenkel 14 in der Gebrauchslage beider Rohre 10, 11 etwa waagrecht und ist so angeordnet und ausgebildet, daß aus dem Kapillarspalt 13 kommendes, sich auf ihm ausbreitendes Lot nicht oder nur unwesentlich zur Vergrößerung der Wärmeübergangsfläche beiträgt. Der abgewinkelte Schenkel 14 geht übergangslos in die obere, dem Rohrheizkörper 10 zugewandte Rautenfläche des Wasserführungsrohres 11 über.

## Patentansprüche

1. Elektrischer Durchlauferhitzer für Getränkebereiter, mit den Merkmalen:

a) ein elektrischer Rohrheizkörper (1,10) und ein Wasserführungsrohr (2,11) sind nebeneinander angeordnet und durch Löten wärmeleitend miteinander verbunden;

b) in der Gebrauchslage beider Rohre (1,10; 2,11) überragt der Scheitel des Rohrheizkörpers (1,10) den Scheitel des Wasserführungsrohres (2,11);

**gekennzeichnet durch die Merkmale:**

c) die Größe der für den Wärmeübergang vom Rohrheizkörper (1,10) auf das Wasserführungsrohr (2,11) maßgebenden Fläche ist durch eine mindestens an einem der beiden Rohre (1,10 oder 2,11) angeformte Grenzfläche (4,12) bestimmt, die mit einer von ihr bedeckten Gegenfläche am anderen Rohr einen Kapillarspalt (5,13) für das Lot der Lotverbindung bildet und in der Gebrauchslage beider Rohre (1,10;2,11) aufsteigend verläuft;

d) das obere Ende der Grenzfläche (4,12) geht in einen abgewinkelten Schenkel (6,14) über, der eine Schwemmfläche für aus dem Kapillarspalt (5,13) austretendes, überschüssiges Lot bildet und so verläuft, daß auf ihm sich ausbreitendes Lot nicht oder allenfalls nur unwesentlich zur Vergrößerung der Wärmeübertragungsfläche beiträgt;

e) der Scheitel des lichten Durchganges des Wasserführungsrohres (2,11) überragt das obere Ende der Grenzfläche (4,12).

2. Durchlauferhitzer nach Anspruch 1, **dadurch gekennzeichnet,** daß die Grenzfläche (4) und der abgewinkelte Schenkel (6) am Rohrheizkörper (1) angeformt sind, daß der Querschnitt des Wasserführungsrohres (2) kreisrund ist und daß die Grenzfläche (4) der Kontur des Wasserführungsrohres (2) folgt.

3. Durchlauferhitzer nach Anspruch 1 und 2, **dadurch gekennzeichnet**, daß das Wasserführungsrohr (11) im Querschnitt eine Raute bildet, deren Spitzen in der Gebrauchslage übereinanderliegen, daß die Grenzfläche (12) an die dem Rohrheizkörper (10) zugewandte obere Rautenfläche des Wasserführungsrohres (11) angeformt ist sowie der Kontur des Rohrheizkörpers (10) folgt.

## Claims

1. Electrical continuous-flow heater for drinks-makers having the features:

a) an electrical tubular heating element (1, 10) and a water-carrying tube (2, 11) are arranged side by side and are connected with each other by means of soldering in a heat-conducting manner;

b) in the position of use of both tubes (1, 10; 2, 11) the apex of the tubular heating element (1, 10) projects above the apex of the water-carrying tube (2, 11);

characterised by the features:

c) the size of the surface which is a criterion for the heat transfer from the tubular heating element (1, 10) to the water-carrying tube (2, 11) is determined by means of a boundary surface (4, 12) which is pre-formed on at least one of the two tubes (1, 10 or 2, 11) and which with a counter-surface covered by it on the other tube forms a capillary gap (5, 13) for the solder of the soldered connection and in the position of use of both tubes (1, 10; 2, 11) extends in an ascending manner;

d) the upper end of the boundary surface (4, 12) changes into an angular side piece (6, 14) which forms

3

a washing surface for excess solder issuing from the capillary gap (5, 13) and extends so that solder spreading on it does not contribute or at all events only negligibly contributes to the increase in the heat-transfer surface;

e) the apex of the clear passage of the water-carrying tube (2, 11) projects above the upper end of the boundary surface (4, 12).

2. Continuous-flow heater according to claim 1, characterised in that the boundary surface (4) and the angular side piece (6) are pre-formed on the tubular heating element (1), in that the cross section of the water-carrying tube (2) is circular and in that the boundary surface (4) follows the contour of the water-carrying tube (2).

3. Continuous-flow heater according to claim 1 and 2, characterised in that the water-carrying tube (11) in cross section forms a rhombus, the tips of which lie opposite each other in the position of use, in that the boundary surface (12) is pre-formed on the upper rhombic surface of the water-carrying tube (11) which faces the tubular heating element (10) and also follows the contour of the tubular heating element (10).

## Revendications

1. Chauffe-eau électrique instantané pour appareil de préparation de boissons, présentant les caractéristiques suivantes :

a) un corps tubulaire chauffant électrique (1,10) et un tube d'amenée d'eau (2,11) sont disposés côte-à-côte et sont réunis entre eux de façon thermoconductrice par soudage;

b) dans la position d'utilisation des deux tubes (1,10; 2,11), la partie sommitale du corps tubulaire chauffant (1,10) fait saillie au-dessus de la partie sommitale du tube d'amenée d'eau (2,11);

caractérisé par les caractéristiques suivantes :

c) la taille de la surface, qui est déterminante pour le transfert thermique du corps tubulaire chauffant (1,10) au tube d'amenée d'eau (2,11), est déterminée par une surface limite (4,12) formée sur l'un des deux tubes (1,10) ou (2,11) et qui délimite, avec une surface antagoniste, qu'elle recouvre, sur l'autre tube, une fente capillaire (5,13) pour la brasure de la liaison brasée et s'étend dans le sens montant dans la position d'utilisation des deux tubes (1,10; 2,11);

d) l'extrémité supérieure de la surface limite (4,12) se prolonge par une branche coudée (6,14), qui forme une surface d'écoulement pour l'excès de brasure, qui sort par la fente capillaire (5,13), et s'étend de telle sorte que la brasure qui se propage sur cette surface ne contribue pas ou tout au plus seulement de façon secondaire à accroître la surface de transfert thermique;

e) la partie sommitale du passage libre du tube d'amenée d'eau (2,11) fait saillie au-delà de l'extrémité supérieure de la surface limite (4,12).

2. Chauffe-eau instantané suivant la revendication 1, caractérisé par le fait que la surface limite (4) et la branche coudée (6) sont formées sur le corps chauffant tubulaire (1), que la section transversale du tube d'amenée d'eau (2) est circulaire et que la surface limite (4) suit le contour du tube d'amenée d'eau (2).

3. Chauffe-eau instantané suivant les revendications 1 et 2, caractérisé par le fait que le tube d'amenée d'eau (11) délimite en coupe transversale un losange, dont les sommets sont superposés dans la position d'utilisation, que la surface limite (12) est formée sur la surface supérieure, tournée vers le corps tubulaire chauffant (10), du tube d'amenée d'eau (11) à section en losange et suit le contour du corps tubulaire chauffant (10).

FIG 1

FIG 2

FIG 3